# EUROPEAN PATENT APPLICATION

(11) **EP 3 023 682 A1**
(43) Date of publication of application: **25.05.2016**
(21) Application number: 15192809.0
(22) Date of filing: 03.11.2015
(51) Int. Cl.: F16L 47/03, F16L 47/34

(54) **PURGE TEE ASSEMBLY**

(30) Priority: 20.11.2014 GB 201420665
(71) Applicant: Radius Systems Limited, Alfreton, Derbyshire DE55 2JJ (GB)
(72) Inventor: Muckle, Derek, Long Whatton, Leicestershire LE12 5DN (GB); Christodoulou, Mario, Mansfield, Notts NG18 4HL (GB)
(74) Representative: Stainthorpe, Vanessa Juliet

(57) **Abstract**

A purge tee assembly (10) for purging a plastics pipeline (20) comprising:
a saddle (12) provided with an electrofusion element;
a hollow body (14), upstanding from the saddle and provided with an axial bore (16) and an externally threaded end (18) to receive a first screw threaded end cap;
a cutter (15) disposed within said axial bore and advanceable and withdrawable therein to cut a hole in the pipeline when the saddle (12) is fitted thereto; and
a spigot (22) attached to the hollow body (14) , the spigot having a spigot bore in fluid connection with the axial bore of the hollow body, wherein said spigot comprises an upstanding portion (26) substantially parallel to said axial bore of said hollow body, an intermediate portion (28) joining said upstanding portion with said hollow body and a second end cap for capping the distal outlet (30) of the upstanding portion (26),
wherein said hollow body (14), spigot (22) and said distal outlet (30) are aligned along a longitudinal axis which, in use, is substantially parallel the longitudinal axis of a plastics pipeline (20) to be purged.

## Description

The present invention relates to a purge tee assembly, more specifically, to purge a tee assembly for use in the commissioning and decommissioning of mains gas pipes, particularly plastics pipes.

### BACKGROUND

A key step in the commissioning and decommissioning of mains pipes is purging, which in its simplest terms means removing fluid from a pipe or container and replacing it with another fluid. It is a desire of the engineer to prevent mixing of air and natural gas when purging a mains pipeline as generally, the less mixing that occurs, the safer and more efficient the purge will be.

Previously, mains pipes were purged by making use of a conventional tapping tee, a length of plastics pipe and a vent pipe on a mains pipeline. In this technique, the vent pipe, typically made from metal, is positioned in an upstanding orientation and a pinch clamp is subsequently used to squeeze and thereby seal the plastics pipe. The pinch clamp is opened to purge the pipe and closed when the purge is complete. The vent pipe is subsequently removed and a remaining free end of the plastics pipe beyond the pinch clamp is sealed by an end cap. Electrofusion is typically used to seal the joint of the end cap. A number of risks are associated with this previous method, such as the use of an external heat source during the electrofusion process, which poses a risk of ignition. An external heat source is typically derived from a high current electrical circuit in fluid contact with the pressurised chamber. Movement within a poorly welded assembly can caused localised overheating of material with risk of electrical short circuits which could give rise to a spark or ignition of material. If even a small amount of gas leaks past the pinch clamp and mixes with air in the chamber between the pinch clamp and the cap then there is a risk of explosion.

Furthermore, this process leaves a length of live, but useless pipe, posing an unnecessary hazard.

Generally, tapping tees comprise a body with a through bore, a saddle that contours to the shape of the mains pipe and is connected to the body and a spigot, through which a branch pipe may be connected. The saddle may further comprise an electrofusion element or additional components that incorporate an electrofusion element, such as an electrofusion mat. The electrofusion element is embedded in a fusible polymer material, which enables the tapping tee assembly to be bonded to the mains pipe. The spigot has a spigot bore, which connects the bore of the body to the branch pipe. Pipe assemblies with saddles and saddle shaped with electrofusion elements and mats are disclosed in US patents 4933037, 4806181, 5104468, 5601315 and 5348045 and in UK application GB2310264. The entire disclosures are incorporated herein by reference for all purposes.

A number of tapping tee assemblies are provided with an integral cutting component in the body, which is configured to be driven through the body to cut through both the saddle and the mains pipeline once the saddle has been bonded to the mains pipeline and the branch line has been completely fitted to the spigot. A winding tool is typically used to advance and withdraw the cutter in the bore, which in some assemblies may be threaded and engaged with a corresponding thread of the bore of the body. The cutter, together with the coupon of pipe cut from the mains pipe, is able to form a seal in the body until the cutter is withdrawn past the branch into the spigot. Thereupon the winding tool is removed and a threaded cap is fitted on to the opening of the top of the body, which is correspondingly threaded to receive the threaded cap, thereby sealing the tapping tee. Any leak past the cutter/coupon combination is small, inconsequential and may quickly be stopped altogether by the mechanical attachment of the cap. The threaded cap may further be provided with an elastomeric seal to form a permanent seal between the cap and the body. Tapping tee assemblies provided with an integral cutter as described herein offer the advantage that the use of the cutter/coupon combination to seal the mains pipe enables the assemblies to be used with the mains pipe live.

EP2594836 A1 discloses a purge tee assembly, which differs from conventional tapping assemblies in that the purge tee assembly further comprises an externally screw threaded distal outlet on the spigot substantially parallel the axial bore of the hollow body, and a second screw cap. The correspondingly threaded second screw cap or other ancillary apparatus may be received by the distal outlet. The first and second screw caps of the invention disclosed in EP2594836 A1 provide the final seal of the arrangement and therefore a heat source is not required for this step. As such, a small leakage should not pose a hazard as there is no danger of ignition. Furthermore, screwing the cap shut forms a complete seal, which is not compromised by any small leaks past the cutter and its coupon.

GB2453569 discloses a purge tee assembly in which the spigot has an externally screw threaded distal outlet substantially parallel the axial bore of the hollow body and a second plastics screw cap screwable on the externally screw threaded distal outlet. The inclusion of an outlet parallel the hollow body enables the purge tee assembly to be connected to the mains pipeline in a horizontal attitude, with the spigot extending vertically upwardly, thereby permitting a vent pipe to be directly connected. In some embodiments, the body and distal outlet further comprise elastomeric O-rings, which enhances the seal made by the screw caps applied.

It is an object of the present invention to provide engineers in the field with a safe, reliable and efficient means to purge mains pipes.

### BRIEF SUMMARY OF THE DISCLOSURE

In accordance with one aspect of the present invention there is provided a purge tee assembly for purging a plastics pipeline comprising: a saddle provided with an electrofusion element;
a hollow body, upstanding from the saddle and provided with an axial bore and an externally threaded end to receive a first screw threaded end cap;
a cutter disposed within said axial bore and advanceable and withdrawable therein to cut a hole in the pipeline when the saddle is fitted thereto; and a spigot attached to the hollow body, the spigot having a spigot bore in fluid connection with the axial bore of the hollow body, wherein said spigot comprises an upstanding portion substantially parallel to said axial bore of said hollow body, an intermediate portion joining said upstanding portion with said hollow body and a second end cap for capping said distal outlet,
characterised in that said hollow body, spigot and said distal outlet are aligned along a longitudinal axis which, in use, is substantially parallel the longitudinal axis of a plastics pipeline to be purged.
The longitudinal alignment of the hollow body, spigot and distal outlet enables these components to be moulded as a single piece, thus reducing manufacturing cost and complexity. The longitudinal alignment also provides better strength and stability of the assembly when it is in place on the mains pipeline, as compared with prior art assemblies in which the spigot and distal outlet would be projecting freely, supported only by their connection to the hollow body.

Preferably, the saddle is non-circular and could be generally oval, an elongated circle, a stadium or an oblong. In some embodiments, the electrofusion element is mounted within a thermoplastic polymer mat.

As mentioned above, in an embodiment, the saddle, hollow body and spigot are integrally-formed as a unitary component.

The assembly may further comprise a flow profiling member having a base portion and an upstanding portion, the base portion being positionable intermediate the saddle and the pipeline with the upstanding portion protruding upwardly into the spigot bore. The flow profiling member enables the flow of fluid through the spigot bore to be controlled. In particular, the upstanding portion of the flow profiling member may be suitably shaped to define a desired fluid flow path within the spigot bore. It is possible to define the desired fluid flow path such that fluid flowing therethrough maintains a minimum or a substantially constant velocity. In a particular embodiment, this minimises undesirable mixing of air and gas during the purging process.

In an embodiment, the flow profiling member includes an electrofusion element in its base portion. The flow profiling member may be integrally-formed with the saddle. Alternatively, the flow profiling member may be formed as a separate component to the saddle and subsequently attached thereto.

Preferably, the base portion is suitably shaped for a close fit with the saddle.

In an embodiment, the purge tee assembly includes an aperture alignable with the hollow body and through which said cutter can pass.

Preferably, the upstanding portion of the flow profiling member is shaped such that the desired flow path has substantially constant cross-sectional area.

The upstanding portion of the flow profiling member may be shaped such that fluid flowing through the desired flow path has a substantially constant velocity.

In an embodiment, the upstanding portion of the flow profiling member creates a turbulent flow path.

Preferably, said saddle is configured such that it provides structural support for both said hollow body and said tubular spigot when the purge tee assembly is in place on the pipeline.

In an embodiment, said second end cap is an internally screw-threaded plastics cap.

Alternatively, said second end cap is an externally screw-threaded plug moveable from a non-sealing position within the upstanding portion of the spigot to a sealing position in which the plug seals said distal outlet. In this embodiment, the distal outlet may include inwardly-directed lugs to capture said plug in the upstanding portion of the spigot. Preferably, in said non-sealing position, the plug cooperates with said flow profiling member to define part of said desired flow path.

The purge tee assembly may optionally further comprise O-rings to enhance the seal made by said first and second end caps.

In an embodiment, the assembly further comprises a vent pipe for connection to said distal outlet.

In an embodiment, said end caps are made from plastics.

Preferably, any combination of the saddle, hollow body and spigot are a single integrally-moulded structure

In some embodiments, any of the saddle, the hollow body and/or the spigot are made as individual components and combined together into an integral structure.

According to a second aspect of the invention there is provided a method for purging a plastics pipeline, using a purge tee assembly as described in any of the preceding paragraphs, said method comprising the steps:
i. electro-fusing said purge tee assembly to a plastics pipeline;
ii. fitting a vent pipe to the distal outlet;
iii. translating said cutter down said axial bore;
iv. cutting a hole in said plastics pipeline with said cutter;
v. translating said cutter upwards through said axial bore, such that said spigot bore becomes in fluid connection with said plastics pipeline;
vi. venting unwanted fluid from said plastics pipeline;
vii. translating said cutter down said axial bore such that said cutter is disposed in said hole to temporarily, at least partially, close the fluid connection between said pipeline and said spigot bore;
viii. removing said vent pipe; and
ix. sealing said purge tee assembly by positioning said first and said second end caps onto said externally threaded end of said hollow body and said outlet respectively.

Preferably, said plastics pipeline is scraped to remove nominally 0.2 to 0.4mm of its surface prior to executing step i).

Preferably said method further comprises the steps of testing the integrity of any seals of said purge tee assembly prior to step ii).

Preferably said purge tee assembly is secured to said plastics pipeline by a clamp tool during step i).

Preferably, when said second end cap is an externally screw threaded plug, further comprising the step of translating the plug up the upstanding portion of the spigot from a non-sealing position to a sealing position in which the plug seals said distal outlet. Optionally, when said plug reaches a retaining lug it engages with an "O" ring thereby forming a seal.

Within the scope of this application it is expressly intended that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

### BRIEF DESCRIPTION OF THE DRAWINGS

Embodiments of the invention are further described hereinafter by way of example only, with reference to the accompanying drawings in which:
Figures 1-3 are cross sectional view of a purge tee assembly showing operation of the cutter to remove a coupon from the mains pipeline;
Figure 4 is an end view, partly in cross-section, in the direction A indicated in Figure 3;
Figure 5 is a perspective view of a flow profiling member;
Figure 6 is a cross-sectional view of a purge tee assembly and flow profiling member in place; and
Figure 7 is a cross-sectional view of an alternative embodiment of the purge tee assembly in which the second end cap is an externally screw-threaded plug.

### DETAILED DESCRIPTION

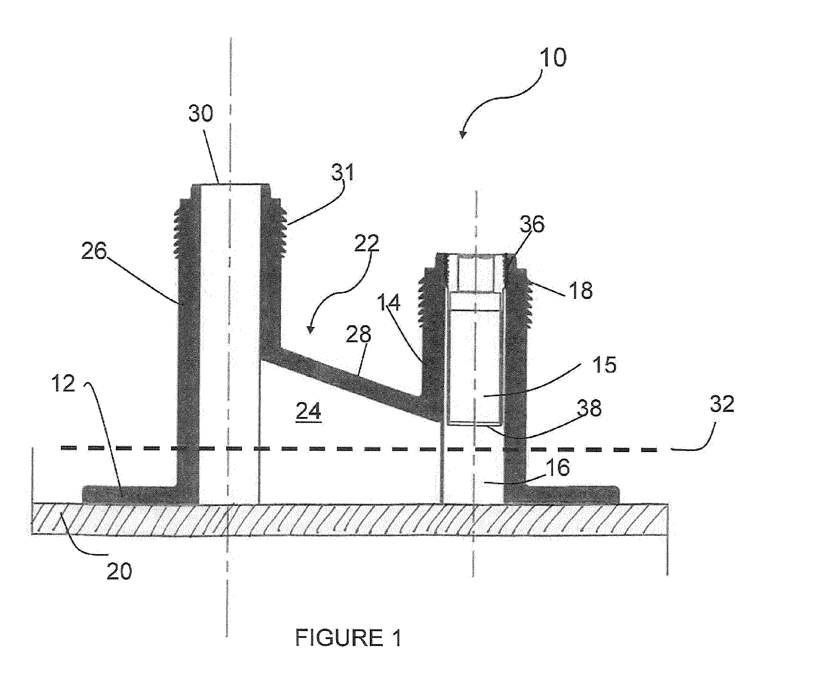

In one embodiment depicted in Figure 1, the purge tee assembly 10 comprises a saddle 12 at its base which is shaped to follow the contours of a mains pipeline 20 which it is desired to purge. The saddle 12 includes an electrofusion element (not shown in Figure 1) for fusing the purge tee assembly to the pipeline 20. A hollow body 14 is upstanding from the saddle 12 which has an axial screw threaded bore 16 and an externally threaded end 18 for receiving a first end cap (not shown in Figure 1). A cutter 15 is disposed within the axial bore 16 and is advanceable and withdrawable therein to cut a hole in the pipeline 20 when the saddle is fitted thereto. The cutter 15 has a cutting edge 38 and a screw threaded outer surface 36 that cooperates with the screw thread of the axial bore 16. In use, the axial bore 16 extends perpendicularly or axially away from the pipeline 20.

The purge tee assembly 10 further comprises a spigot 22 attached to the hollow body 14, the spigot comprising an upstanding portion 26 that is substantially parallel to said axial bore 16 of hollow body and an intermediate portion 28 joining the upstanding portion 26 and hollow body 14. The spigot 22 has a spigot bore 24 in fluid connection with the axial bore 16 of the hollow body 14 and a distal outlet 30 on the upstanding portion 26 of the spigot. A second end cap (not shown in Figure 1) is provided to seal the distal outlet 30 when required.

In contrast to known purge tee assemblies, the purge tee assembly 10 is configured in a way such that the hollow body 14 and the spigot 22 (intermediate section 28, upstanding portion 26 and distal outlet 30)are aligned along a longitudinal axis 32, which, in use is substantially parallel to the longitudinal axis 34 of the pipeline 20. This has significant advantages over the prior art, for example, the longitudinal arrangement is much stronger and more stable than a conventional purge tee which typically only has a small circular region in the vicinity of the hollow body housing the cutter fused to the mains pipeline and has the spigot projecting laterally with no support other than its attachment to the hollow body.

Another significant advantage is that the hollow body 14 and spigot 22 including the upstanding portion 26 can be moulded in a single piece, thus reducing manufacturing cost and complexity.

The fundamental operation of the purge tee assembly 10 is similar to that of the prior art, despite the different construction, and is illustrated in Figures 1-3 which show the cutter 15 advancing down the hollow body 14 to cut out a coupon 62 from the mains pipeline 20. This is described in more detail below.

End caps are provided in order to seal the purge tee assembly 10 after a pipeline 20 has been purged. Optionally, the assembly 10 may further comprise O-rings (not shown) to enhance the seal made by end caps. In the embodiment depicted in Figures 1-3, the first and second end caps are internally screw threaded plastics caps.

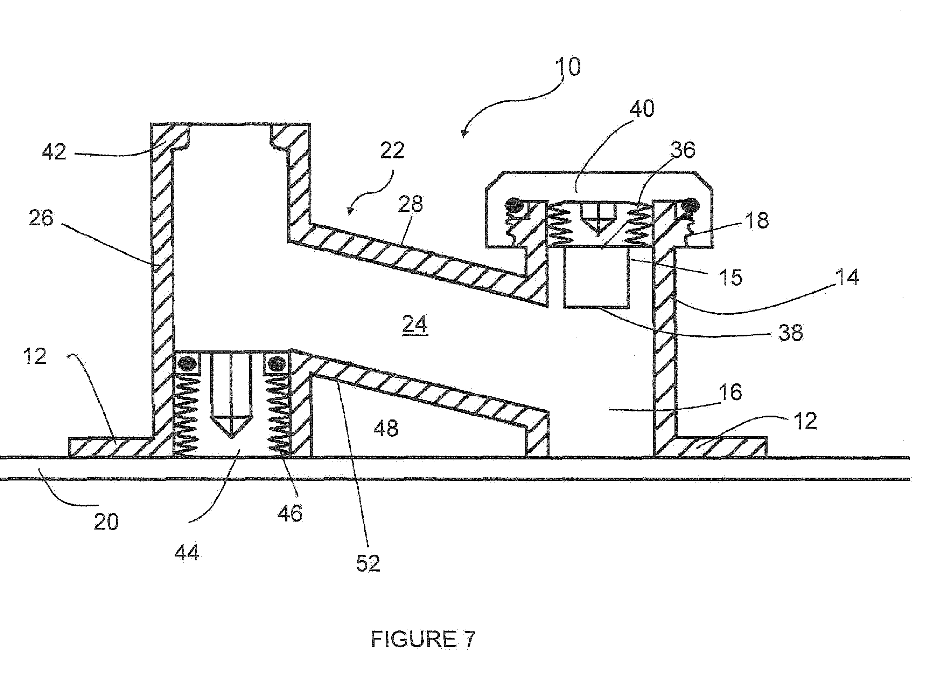

In an alternative embodiment depicted in Figure 7, the second end cap may be a plug 44, with an externally screw threaded outer surface, 46, moveable from a non-sealing position (as shown) to a sealing position (not shown), in which the plug seals the distal outlet 30. In this embodiment, the distal outlet 30 may include inwardly directed lugs 42 to capture the plug 44 in the upstanding portion 26 of the spigot 22.

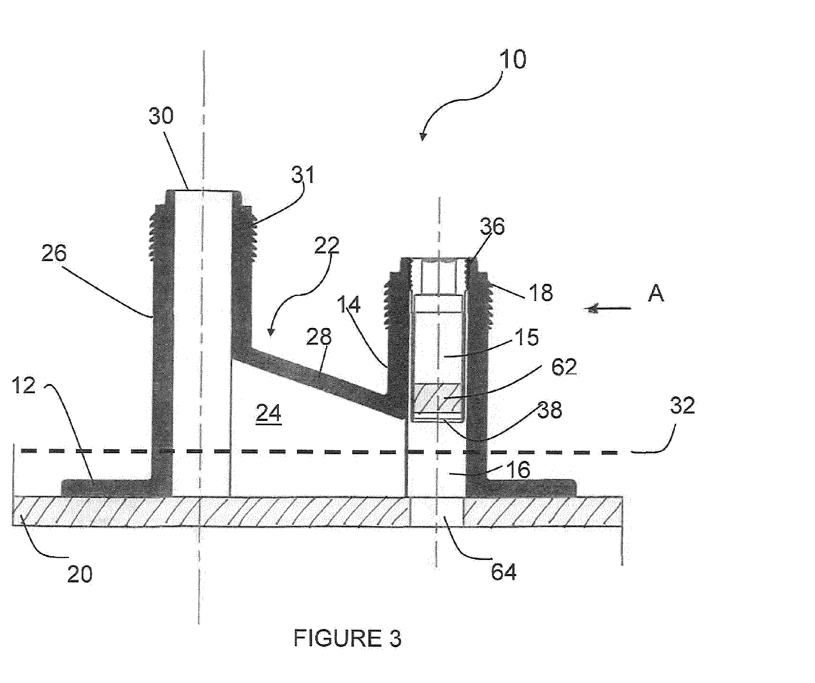

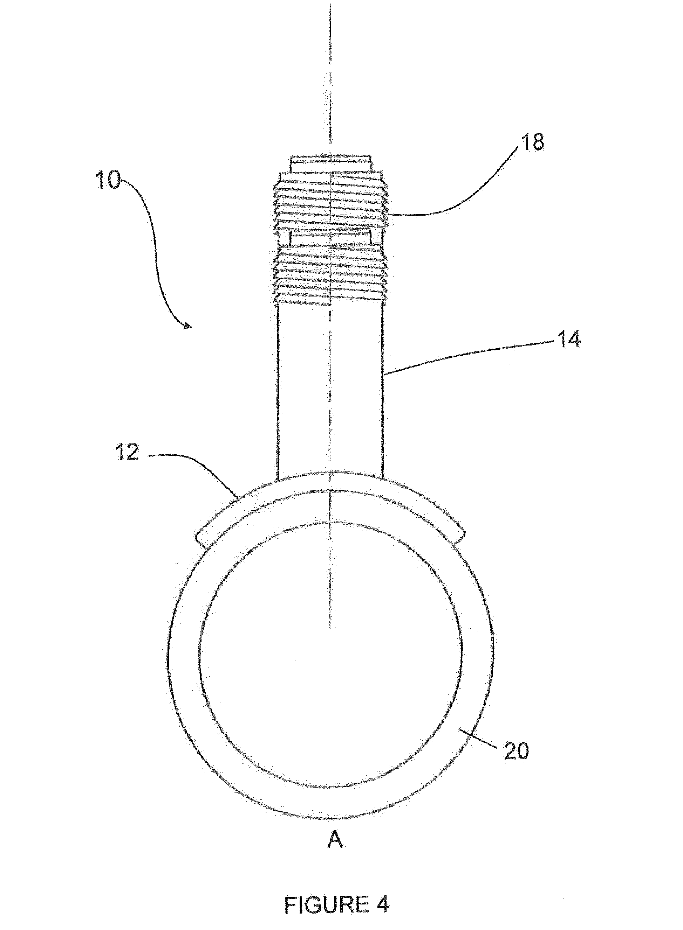

Figure 4 is an end view, partly in cross-section, in the direction A indicated in Figure 3 and demonstrates how the saddle 12 conforms to the curvature of the pipeline 20. The saddle 12 is configured such that it provides structural support for both the hollow body 14 and the tubular spigot 22 when the purge tee assembly 10 is in place on the pipeline 20. The saddle 12 is non-circular in shape and generally may be an oval, elongated circle, ellipse, stadium, obround or oblong. The saddle 12 may be formed integrally with the hollow body 14 and spigot 22 as a single unitary component, giving the cost savings mentioned above in providing a single moulding. Alternatively, the saddle 12 may be formed as a separate component and subsequently combined with the hollow body 14 and spigot 22.

As shown in Figures 1-3, the intermediate portion 28 of the spigot defines a tapered flow path through the spigot bore 24, the flow path having a varying cross-sectional area. It may be desirable to modify, narrow or otherwise control the shape of the flow path and this can be achieved using a flow profiling member 48 described below.

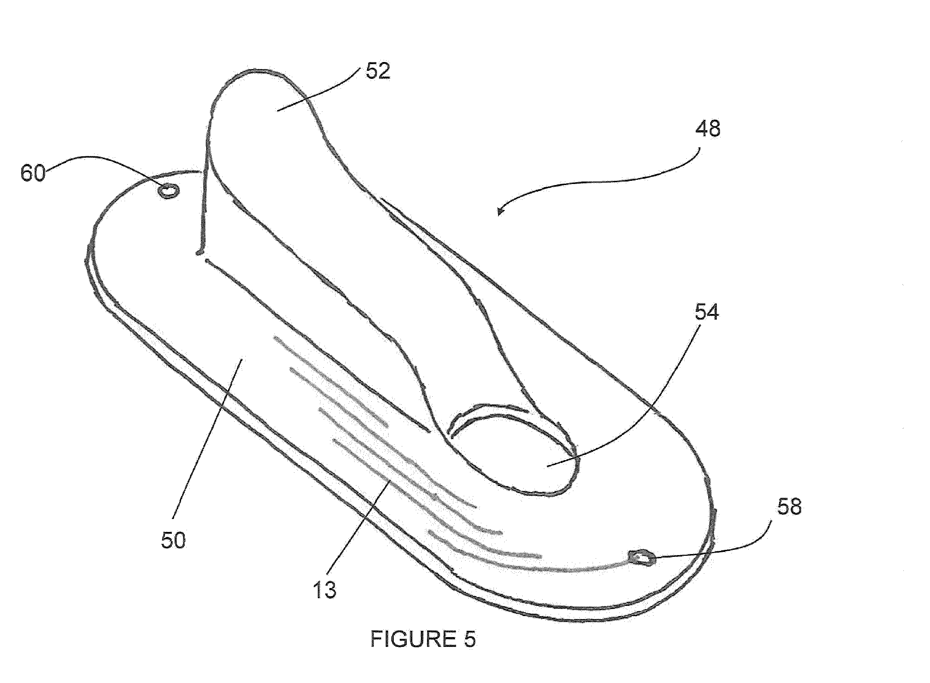

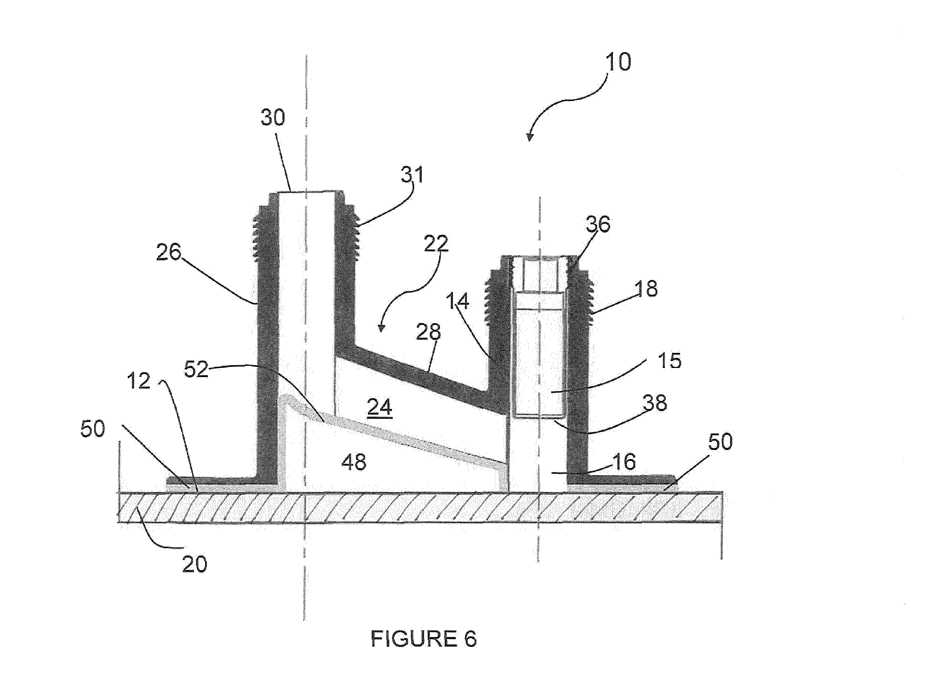

In one embodiment depicted in Figures 5-7, the purge tee assembly 10 is provided with a flow profiling member 48, having a base portion 50, positionable intermediate the saddle 12 and the pipeline 20, and an upstanding portion 52, which protrudes upwardly into the spigot bore 24. The flow profiling member 48 includes an aperture 54, alignable with the hollow body 14 and through which the cutter 15 can pass. The flow profiling member 48 may be integrally formed with the saddle 12, or alternatively, formed as a separate component to the saddle 12 before subsequently attaching it thereto. Preferably the base portion 50 is suitably shaped to provide a close fit with the saddle 12.

A function of the flow profiling member 48 is to define a desired predetermined fluid flow path within the spigot bore 24 and the upstanding portion 52 is therefore shaped accordingly. When the second end cap is an externally screw threaded plug 44 the plug 44 may cooperate with the flow profiling member 48 to define part of the desired flow path (as shown in Figure 7 where it can be seen that the upper surface of the plug 44 is flush with the highest portion of the flow profiling member 48. The flow profiling member 48 could be shaped such that the desired flow path has a substantially constant cross sectional area (this could be achieved by the tapered upstanding portion 52 shown in Figure 5). Alternatively, the flow profiling member 48 may be shaped such that the desired flow path has a varying cross-sectional area. By selection of the shape of the upstanding portion 52, different types of flow, such as turbulent flow or laminar flow, can be created. Indeed, the flow profiling member 48 can be shaped to achieve fluid flow with a desired Reynolds number, where Reynolds number is the ratio of inertial forces to viscous forces. It should be noted that the flow profiler 48 could potentially be used in other purge tee assemblies and indeed other applications, not necessarily in the purge tee assembly of the present claims, where it is desired to modify or control a flow path and/or its characteristics.

It is desirable for there to be a preferred minimum velocity of fluid flow within the mains pipeline that is being purged to prevent stratification and potential mixing of the fluid. In the example of the UK gas distribution system, a minimum purge velocity in the mains pipeline is 0.5 to 1.5 m/s but more typically the purge velocity is planned to be greater than 1.5 m/s in practice. The flow path through the purge tee assembly must have a minimum cross sectional area to enable the purge velocity to be achieved and it is preferable that the assembly is sized to minimise head loss due to abrupt changes in cross section or direction of flow. The flow profiling member 48 can be used to minimise head loss through the purge tee assembly in support of achieving the minimum purge velocity in the mains pipeline, and to do so in a way that avoids significant mixing of the purge fluid. The flow profiling member can remove or reduce the effect of abrupt increases or decreases in the cross-section of the flow path that would otherwise contribute to pressure loss, as well as defining the direction of the flow path.

As shown in Figure 5, the base portion 50 of the flow profiling member 48 may include an electrofusion element 13 and two holes 58, 60, through which terminal pins can pass in order to actuate the electrofusion element 13. The electrofusion element in the base of the flow profiling member 48 may be sufficient to fuse both the saddle 12 and the flow profiling member 48 to each other and to the pipeline 20. In such a case, the electrofusion element 13 may be considered as the EF element with which the saddle is provided. Alternatively, in other embodiments there may be electrofusion elements in both the saddle 12 and the flow profiling member 48, or in the saddle 12 alone, or on both the top and bottom surfaces of the base portion of the flow profiling member 48.

In any of the above embodiments, the electrofusion element 13 may be mounted within a fusible thermoplastic polymer mat (not illustrated), which in turn is mounted on the saddle 12 or the top and/or bottom of the base portion of the flow profiling element 48. It is possible to have the electrofusion element 13 within a polymer mat having the shape of the flow profiling member 48, either with or without the upstanding portion 52, e.g. a stadium track shaped polymer mat. The mat includes holes 58, 60, through which terminal pins can pass, contacting the electrofusion element 13, thereby providing means for energising the electrofusion element 13.

The purging method is illustrated schematically in Figures 1-3. The purge tee assembly 10 is first electrofused to a plastics pipeline 20 (Figure 1). Prior to this, the immediate environment around the pipe 20 and fitting to be jointed must be clean, dry and free from contaminants. In the field, it is a general recommendation to undertake electrofusion under a welding shelter to assist with the prevention of airborne dust or rain from contaminating the pipe 20 surface once prepared. The preparation of a pipe 20 surface typically involves cleaning and optionally, scraping the pipe 20 to remove a small layer from the surface to ensure that surface dirt and oxide layers do not impede the electrofusion process. In one embodiment of the present invention, the surface of the pipe 20 being purged is scraped to remove nominally 0.2 to 0.4mm of its surface prior to electrofusion. During the electrofusion process, the cutter 15 is disposed at the top of the axial bore 16 and is flush with the top of the hollow body 14. Optionally, a clamp tool may temporarily be used to secure the purge tee assembly 10 to the pipeline 20 to prevent the assembly 10 from moving during the electrofusion step. Electrofusion element 13 heats up due to electrical resistance when the element 13 is electrically energised. This causes the surrounding thermoplastic polymer mat 56 to melt. The thermoplastic polymer mat 56 fuses the saddle 12 of the purge tee assembly 10 to the mains pipe 20 when it is allowed to cool. The seal secures the purge tee assembly 10 in place during the purging procedure and must be airtight.

Once the thermoplastic polymer mat 56 has been allowed to cool and set, the integrity of the weld may optionally be tested. The integrity of the weld is determined by removing one of the end caps and performing a pressure test. Once it is ascertained that the weld is of appropriate integrity and in the correct location on the pipe 20. A vent pipe (not shown) is fitted to the distal outlet 30. A variety of means may be used to connect the vent pipe to the distal outlet 30. For example, the end of said vent pipe may be screw threaded and able to screw directly onto an external screw thread 31 of the upstanding portion 26 of the spigot 22.

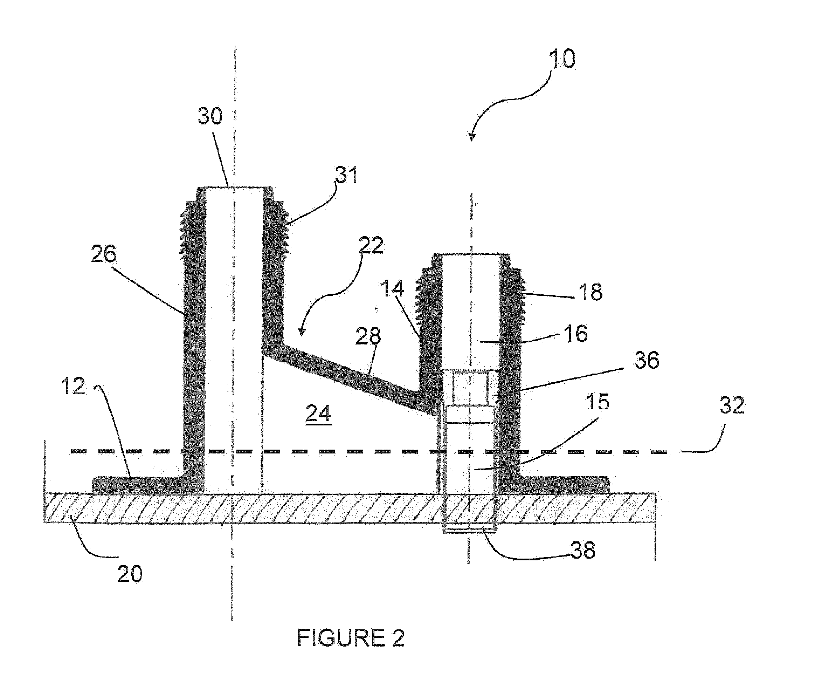

Following the fitting of the vent pipe, a coupon 62 is cut from the pipe 20 using the cutting edge 38 as depicted in Figure 2. To achieve the cut, the first end cap 40 is removed and cutter 15 is translated downward within the axial bore 16 using a winding tool, where it cuts into the pipe 20. The coupon 62 remains lodged within the cutter 15 thereafter, leaving a circular hole 64 in the crown of the pipe 20.

After the vent pipe is securely fitted, its integrity is optionally tested and the purging process can take place. After cutting the hole 64 in the pipe 20, the cutter 15 is translated back to the top of said axial bore 16 (Figure 3) using the winding tool (not shown), such that spigot bore 24 becomes in fluid connection with said plastics pipeline 20 and the first cap 40 is replaced. This enables the contents of pipe 20 to be vented and the cutter 15 and the coupon 64 thus serve as a valve, allowing or prohibiting fluid to flow from the pipe 20 to the vent pipe as desired. Following completion of the purge, the cutter 15 is wound down the axial bore 16 once more into the hole 64 that it originally created previously, effectively acting as a plug to at least partially close the fluid connection between the pipeline 20 and the spigot bore 24. At this point, the fluid source is isolated and any ancillary components, such as the vent pipe (not shown) may be safely removed from the distal outlet 30. Finally, both first and second end caps are secured over their respective external screw threads 18, 31, permanently sealing the purge tee assembly 10. Optionally, the purge tee assembly 10 may further comprise O-rings (not shown) to enhance the seal made by said first and second end caps.

In an alternative embodiment shown in Figure 7, when the second end cap is an externally screw threaded plug 44, the distal outlet 30 is sealed by translating the plug 44 with a winding tool from a non-sealing position as shown in Figure 7, to a sealing position in which the plug 44 seals the distal outlet. In this embodiment, said distal outlet 30 may further comprise inwardly directed lugs 42 to capture said plug 44 in the upstanding portion 26 of the spigot 22. This embodiment may also further comprise O-rings to enhance the seal formed. In this embodiment where O-rings are provided, the lugs 42 may optionally have a smooth section to engage the O-ring to form an enhanced seal made by the plug.

Throughout the description and claims of this specification, the word "integral" encompasses both "integrally formed with" and "combined together with" and therefore can relate to either a unitary (integrally formed) part or multipart components combined together to form a single integral part.

Throughout the description and claims of this specification, the word "non-circular" is not limited by any mathematical definition and includes any non-circular shape having a major axis and a minor axis, for example an ellipse, an elongated circle, a stadium, an oblong or rectangle and an obround.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A purge tee assembly for purging a plastics pipeline comprising:
a saddle provided with an electrofusion element;
a hollow body, upstanding from the saddle and provided with an axial bore and an externally threaded end to receive a first screw threaded end cap;
a cutter disposed within said axial bore and advanceable and withdrawable therein to cut a hole in the pipeline when the saddle is fitted thereto; and
a spigot attached to the hollow body, the spigot having a spigot bore in fluid connection with the axial bore of the hollow body, wherein said spigot comprises an upstanding portion substantially parallel to said axial bore of said hollow body, an intermediate portion joining said upstanding portion with said hollow body and a second end cap for capping said distal outlet,
**characterised in that** said hollow body, spigot and said distal outlet are aligned along a longitudinal axis which, in use, is substantially parallel the longitudinal axis of a plastics pipeline to be purged.

2. A purge tee assembly as claimed in claim 1, wherein said saddle is non-circular, preferably wherein said saddle is generally oval, an elongated circle, a stadium or an oblong.

3. A purge tee assembly as claimed in claim 1 or claim 2, wherein the electrofusion element is mounted within a thermoplastic polymer mat;
and/or wherein the saddle, hollow body and spigot are integrally-formed as a unitary component.

4. A purge tee assembly as claimed in any of the preceding claims further comprising a flow profiling member having a base portion and an upstanding portion, the base portion being positionable intermediate the saddle and the pipeline with the upstanding portion protruding upwardly into the spigot bore.

5. A purge tee assembly as claimed in claim 4 wherein the upstanding portion is suitably shaped to define a desired fluid flow path within the spigot bore.

6. A purge tee assembly as claimed in claim 4 or claim 5 wherein the flow profiling member includes an electrofusion element in its base portion.

7. A purge tee assembly as claimed in any of claims 4-6 wherein the flow profiling member is integrally-formed with the saddle, or wherein the flow profiling member is formed as a separate component to the saddle and subsequently attached thereto.

8. A purge tee assembly as claimed in any of claims 4-7 wherein the base portion is suitably shaped for a close fit with the saddle;
and/or including an aperture alignable with the hollow body and through which said cutter can pass;
and/or wherein the upstanding portion is shaped such that the desired flow path has substantially constant cross-sectional area;
and/or wherein the upstanding portion is shaped such that fluid flowing through the desired flow path has a substantially constant velocity;
and/or wherein the upstanding portion creates a turbulent flow path.

9. A purge tee assembly as claimed in any of the preceding claims, wherein said saddle is configured such that it provides structural support for both said hollow body and said tubular spigot when the purge tee assembly is in place on the pipeline.

10. A purge tee assembly as claimed in any of the preceding claims wherein said second end cap is an internally screw-threaded plastics cap.

11. A purge tee assembly as claimed in any of claims 1-9 wherein said second end cap is an externally screw-threaded plug moveable from a non-sealing position within the upstanding portion of the spigot to a sealing position in which the plug seals said distal outlet, preferably wherein said distal outlet includes inwardly-directed lugs to capture said plug in the upstanding portion of the spigot;
and/or wherein, in said non-sealing position, the plug cooperates with said flow profiling member to define part of said desired flow path.

12. A purge tee assembly as claimed in any of the preceding claims further comprising O-rings to enhance the seal made by said first and second end caps;
and/or wherein said end caps are made from plastics.

13. A purge tee assembly as claimed in any preceding claim, further comprising a vent pipe for connection to said distal outlet.

14. A purge tee assembly as claimed in any preceding claim, wherein any combination of the saddle, hollow body and spigot are a single integrally-moulded structure; and/or wherein any of the saddle, the hollow body and/or the spigot are made as individual components and combined together into an integral structure.

15. A method for purging a plastics pipeline, using a purge tee assembly as claimed in any of the preceding claims, said method comprising the steps:
i. electro-fusing said purge tee assembly to a plastics pipeline;
ii. fitting a vent pipe to the distal outlet;
iii. translating said cutter down said axial bore;
iv. cutting a hole in said plastics pipeline with said cutter;
v. translating said cutter upwards through said axial bore, such that said spigot bore becomes in fluid connection with said plastics pipeline;
vi. venting unwanted fluid from said plastics pipeline;
vii. translating said cutter down said axial bore such that said cutter is disposed in said hole to temporarily, at least partially, close the fluid connection between said pipeline and said spigot bore;
viii. removing said vent pipe; and
ix. sealing said purge tee assembly by positioning said first and said second end caps onto said externally threaded end of said hollow body and said outlet respectively.

16. A method as claimed in claim 15, wherein said plastics pipeline is scraped to remove nominally 0.2 to 0.4mm of its surface prior to executing step i);
and/or wherein said method further comprises the steps of testing the integrity of any seals of said purge tee assembly prior to step ii);
and/or wherein said purge tee assembly is secured to said plastics pipeline by a clamp tool during step i);
and/or when said second end cap is an externally screw threaded plug, further comprising the step of translating the plug up the upstanding portion of the spigot from a non-sealing position to a sealing position in which the plug seals said distal outlet, preferably when dependent on claim 19, wherein when said plug reaches a retaining lug it engages with an "O" ring thereby forming a seal.
